Europäisches Patentamt

European Patent Office

Office européen des brevets

(11) Numéro de publication: **0 318 365**
**A1**

## (12) DEMANDE DE BREVET EUROPEEN

(21) Numéro de dépôt: 88402914.1

(22) Date de dépôt: 21.11.88

(51) Int. Cl.⁴: **A 01 G 17/08**

(30) Priorité: 23.11.87 FR 8716182

(43) Date de publication de la demande:
31.05.89 Bulletin 89/22

(84) Etats contractants désignés: **DE ES FR GR IT**

(71) Demandeur: **Gobert, Gilbert**
**Cuperly**
**F-51400 Mourmelon le Grand (FR)**

(72) Inventeur: **Gobert, Gilbert**
**Cuperly**
**F-51400 Mourmelon le Grand (FR)**

(74) Mandataire: **Bourgognon, Jean-Marie et al**
**Cabinet Flechner 22, Avenue de Friedland**
**F-75008 Paris (FR)**

(54) **Dispositif de maintien d'un fil sur un poteau de vigne.**

(57) Il est constitué d'un fil métallique pour ressort formant deux spires (6,12) reliées entre elles par deux arceaux (10) tournant leur convexité vers le haut.

FIG_1

## Description

### Dispositif de maintien d'un fil sur un poteau de vigne.

La présente invention est relative aux dispositifs de maintien d'un fil sur un poteau de vigne et aux poteaux comportant ce dispositif.

La vigne est maintenue, pendant sa croissance, entre deux fils métalliques, passant de piquets en piquets, dits fils releveurs, de façon à obtenir un bon alignement des plants, nécessaires au bon entretien et au passage des engins de viticulture.

On connaît déjà un support de fil constitué d'une spire de fil métallique pour ressort enserrant le poteau de vigne. Les deux extrémités de la spire sont coudées vers le haut sensiblement perpendiculairement au plan de la spire. Le viticulteur place les deux fils releveurs sur les tronçons horizontaux du support reliant la spire à ses extrémités. Lorsque la vigne croît, elle a tendance à soulever les fils releveurs à un niveau plus élevé que les extrémités coudées. Les fils releveurs ne sont plus soutenus et tombent à terre.

L'invention pallie cet inconvénient par un dispositif qui maintient mieux les fils releveurs.

Ce dispositif est défini à la revendication 1. Les revendications 2 à 4 en précisent des perfectionnements. L'invention vise aussi un piquet de vigne suivant les revendications 6 et 7.

Les fils releveurs sont ainsi serrés entre le poteau et les arceaux et sont mieux maintenus, quand la vigne croît.

De préférence, le poteau carré est percé de plusieurs perforations à des niveaux différents. On monte les dispositifs au niveau requis par la hauteur de la vigne, avec la possibilité de monter les dispositifs sur plusieurs niveaux à la fois.

Il est avantageux de donner aux arceaux une forme en S. L'introduction du fil releveur par le haut est facilité. La concavité inférieure du S sert de logement au fil releveur qui y est enfermé et ne peut plus sortir du logement par le haut.

Au dessin annexé, donné uniquement à titre d'exemple :

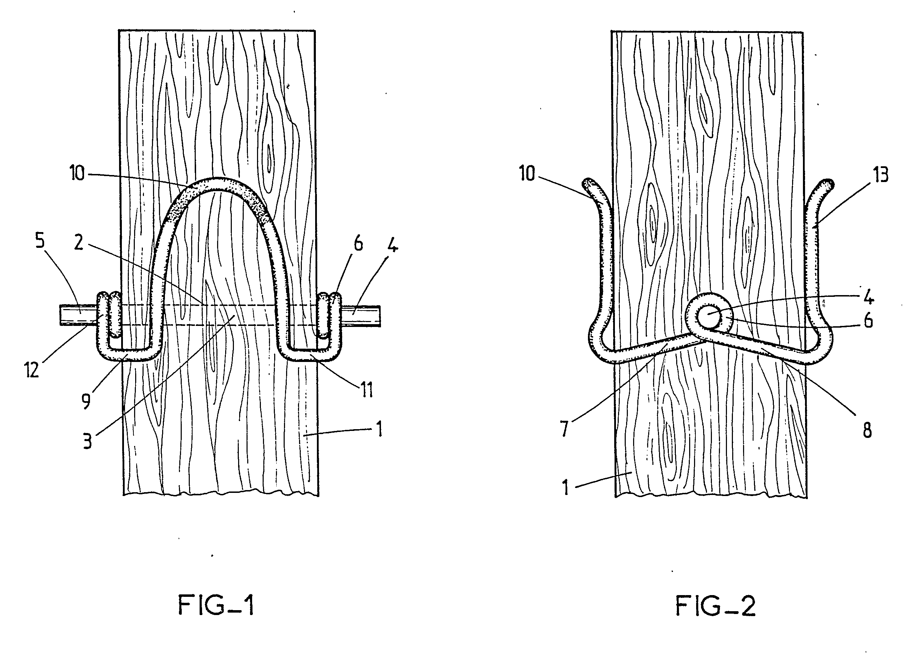

La figure 1 est une vue en élévation d'un piquet de vigne suivant l'invention ; et

La figure 2 en est une vue de côté.

Le piquet de vigne représenté aux figures, comprend un poteau 1 en bois de section droite carrée et percé d'une perforation 2. Dans la perforation 2 est engagée une broche 3 qui fait saillie de deux côtés opposées du poteau 1 par des parties saillantes 4, 5.

Sur la partie 4 est enroulée une spire 6 d'un fil en acier pour ressort. La spire 6 se prolonge par deux tronçons 7, 8 sensiblement horizontaux, passant sur la face du poteau 1 où débouche la perforation 2. Le tronçon 7 est coudé à angle droit et devient un tronçon 9 horizontal passant sur l'une des faces non perforée du poteau 1. Au tron çon 9 fait suite un arceau 10 tournant sa convexité vers le haut et s'entendant le long de la face non perforée du poteau 1. Les branches de l'arceau 10 sont en forme de S. A l'arceau 10 fait suite un tronçon 11 qui est le pendant du tronçon 9, puis le fil métallique est coudé à l'angle droit de manière à revenir, suivant un tronçon sensiblement horizontal, contre la face du poteau 1 opposée à celle contre laquelle se trouve la spire 6. Le fil métallique s'enroule ensuite suivant une spire 12 sur la partie saillante 5 de l'axe 2. Le fil métallique sort de la spire 12 suivant un tronçon sensiblement horizontal puis est coudé pour donner un arceau 13 symétrique de l'arceau 10 par rapport à un plan médiateur du poteau 1.

Pour maintenir deux fils releveurs, il suffit d'écarter les arceaux 10 et 13 du poteau 1, d'y glisser les fils et de laisser les arceaux revenir s'appliquer élastiquement sur le poteau 1.

Suivant une variante préférée, le fil pour ressort est en deux parties. Chaque partie comporte deux tronçons d'extrémité coudés qui pénètrent dans la perforation du poteau 1. Ces tronçons remplacent la broche et la spire du premier mode de réalisation. Les arceaux sont de forme rectangulaire.

### Revendications

1. Dispositif de maintien d'un fil sur un poteau qui comprend des moyens de fixation (3, 6, 12) au poteau (1) et des moyens de maintien du fil, caractérisé en ce que les moyens de maintien (10, 13) sont agencés de manière à retenir et, de préférence, à enfermer le fil entre eux et le poteau.

2. Dispositif suivant la revendication 1, caractérisé en ce que les moyens de maintien comprennent un fil métallique pour ressort formant deux arceaux (10, 13) qui s'étendent dans des plans sensiblement parallèles à des premiers côtés opposés du poteau et qui sont convexes dans la même direction.

3. Dispositif suivant la revendication 1 ou 2, caractérisé en ce que les moyens de maintien sont reliés à des parties d'extrémité des moyens de fixation, qui font saillie de seconds côtés opposés du poteau.

4. Dispositif suivant les revendications 1 à 3, caractérisé en ce que chaque arceau (10, 13) a la forme d'un S.

5. Piquet de vigne comprenant un poteau et un dispositif de maintien d'un fil releveur sur le poteau, caractérisé en ce que le poteau est perforé et le dispositif est tel que défini aux revendications 1 à 4.

6. Piquet suivant la revendication 5, caractérisé en ce que le poteau est percé de plusieurs perforations à des niveaux différents.

7. Piquet suivant la revendication 5, caractérisé en ce que le poteau a une section droite carrée.

FIG_1

FIG_2

EP 0 318 365 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-680494 (OMNIUM COMMERCIAL AGRICOLE ET IMMOBILIER DE L'ILE-DE-FRANCE) <br> * page 2, ligne 8 - page 3, ligne 56; figures 1-8 * <br> --- | 1, 5, 6, 7 | A01G17/08 |
| A | FR-A-1423294 (ROUDET) <br> * page 1, colonne de gauche, dernier alinéa - page 2, colonne de droite, alinéa 1; figure 1 * <br> --- | 2 | |
| A | FR-A-677710 (ROBERT) <br> * le document en entier * <br> ----- | 2 | |

DOMAINES TECHNIQUES RECHERCHES (Int. Cl.4)

A01G

Le présent rapport a été établi pour toutes les revendications

| Lieu de la recherche | Date d'achèvement de la recherche | Examinateur |
|---|---|---|
| LA HAYE | 24 FEVRIER 1989 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P0402)